# EUROPEAN PATENT SPECIFICATION

(11) **EP 4 260 677 B1**
(45) Date of publication and mention of the grant of the patent: **06.11.2024**
(21) Application number: 23164888.2
(22) Date of filing: 29.03.2023
(51) Int. Cl.: A01D 34/00, B62D 7/14, B60K 17/22, B60K 7/00, B60K 17/04, B62D 11/00

(54) **ROBOT LAWNMOWER WITH DRIVING WHEELS ADAPTED TO DETECT AN OBSTACLE**
ROBOTERRASENMÄHER MIT ANTRIEBSRÄDERN ZUR ERKENNUNG EINES HINDERNISSES
TONDEUSE À GAZON ROBOTISÉE AVEC ROUES MOTRICES CONÇUES POUR DÉTECTER UN OBSTACLE

(30) Priority: 11.04.2022 IT 202200007136
(43) Date of publication of application: 18.10.2023
(73) Proprietor: Stiga S.p.A. in breve anche St. S.p.A., 31033 Castelfranco Veneto (TV) (IT)
(72) Inventor: VILLANOVA, Marco, 31020 SERNAGLIA DELLA BATTAGLIA TV (IT); FIOR, Roberto, 31033 Via Pozzetto, 24/A - CASTELFRANCO VENETO (TV) (IT)
(74) Representative: Mittler, Andrea

(56) References cited:
- EP-A1- 3 791 708
- WO-A1-99/21406
- FR-A1- 3 069 812

## Description

The present invention relates to a robot lawnmower with driving wheels adapted to detect an obstacle.

Robot lawnmowers provided with sensors which detect impact with animals, things or people, and with sensors for detecting the robot lawnmower itself, are known.

The impact sensors are necessary to stop the robot lawnmower in the event of impact and then ensure it changes travelling direction, while the lifting sensors serve to stop the rotation of the blade for safety reasons if the robot lawnmower is lifted during the working step.

In order to detect impact with animals, people or things, robot lawnmowers are commonly provided with a fluctuating cover which, in the event of impact, moves with respect to the base frame, informing the robot lawnmower by means of sensors and making it stop travelling to then change the direction thereof.

EP-3395148 describes means for detecting impact with obstacles of the movable cover type, with spring means associated with the base frame of the robot lawnmower.

US-2021/0270338 describes means for detecting impact with obstacles of the movable cover type, wherein the movement of the movable cover with respect to the base frame is signaled by magnets.

EP3791708A1 discloses another similar robot lawnmower.

Disadvantageously, the obstacle impact detection means with a movable cover are costly, complex to make and keep efficient.

Robot lawnmowers with fixed cover (therefore not provided with fluctuating cover) which use the reading of the current on the driving motors to stop the travel in the event of impact, and as above, then change the direction of travel, are also known. The disadvantage of this solution is that the impact is significant and before stopping, the wheels tend to skid, ruining the yard; moreover, being significant, the force of impact is perceived as being unpleasant by people or animals.

In addition to collision sensors, WO-2021/206606 describes obstacle detection means of the visual type, i.e. by means of camera, and the use of ultrasound sensors and radar.

With regard to the lifting, the detection of the robot lawnmower occurs by means of sensors when the movable cover moves in vertical direction, thus allowing the sensors to intervene, which perceive the movement thereof in vertical direction with respect to the base frame.

Instead, in case of a fixed cover, the lifting sensor may intervene by means of a vertical movement of the axis of the front wheels, also provided with a specific sensor.

It is the object of the present invention to provide a robot lawnmower with a fixed cover provided with means for detecting obstacles, wherein the response of the driving wheels of the robot lawnmower is faster.

It is a further object of the present invention for the detection means to be affordable and simple to assemble on the robot lawnmower.

It is a further object again of the present invention for the detection means not to make more difficult the detection of the lifting of the robot lawnmower, which is useful for blocking the cutting blade for safety reasons.

According to the invention, said and further objects are achieved by a robot lawnmower comprising a base frame, a cover integral with the base frame, two driving wheels and at least one directional idler wheel, wherein each driving wheel is driven by an electric motor,
characterized in that
each motor is fixed to a bracket to which the respective driving wheel is rotatably fixed,
wherein the robot lawnmower comprises absorbing means of a bump of the robot lawnmower, wherein the absorbing means are adapted to allow the movement of the bracket with respect to the base frame in case of a bump in the direction of motion of the robot lawnmower,
wherein the absorbing means comprise elastic means adapted to keep the bracket in a position of equilibrium with respect to the base frame in the absence of bumps,
said robot lawnmower further comprising at least one sensor fixed to the base frame and adapted to detect said movement of the bracket with respect to the base frame, and a control unit adapted to block and reverse the motion of the driving wheels following the detection of said movement of the bracket with respect to the base frame.

Advantageously, the use of the elastic means allows a quick response to the bump and an effective damping effect: the robot lawnmower is not damaged and quickly resumes working in a different direction without skidding the wheels on the yard.

The absorbing means are simple to associate with the base frame and easily accessible from the outside for possible replacement.

The sensor is fixed to the base frame and well-protected by the cover integral with the base frame.

These and other features of the present invention will become more apparent from the following detailed description of practical embodiments thereof shown by way of non-limiting examples in the accompanying drawings, in which:
Figure 1 shows a top perspective view of a robot lawnmower according to a first embodiment of the present invention;
Figure 2 shows a bottom perspective view of the robot lawnmower;
Figure 3 shows a top plan view of the robot lawnmower, without a driving wheel;
Figure 4 shows a side view of the robot lawnmower, without a driving wheel;
Figure 5 shows a sectional view taken along line V-V of Figure 4;
Figure 6 shows a side view, similar to the one of Figure 4, in a front bump position of the robot lawnmower;
Figure 7 shows a sectional view taken along line VII-VII of Figure 6;
Figure 8 shows a side view, similar to the one of Figure 4, in a rear bump position of the robot lawnmower;
Figure 9 shows a sectional view taken along line IX-IX of Figure 8;
Figure 10 shows a top perspective view of the robot lawnmower, without a wheel and without a cover;
Figure 11 shows a sectional view according to line XI-XI of Figure 3;
Figure 12 shows a sectional view similar to the one of Figure 11, in a lifted position of the robot lawnmower;
Figure 13 shows a perspective view of a detection unit, in working position;
Figure 14 shows a perspective view of the detection unit, in the bump position of the robot lawnmower;
Figure 15 shows a perspective view of the detection unit, in the lifting position of the robot lawnmower;
Figure 16 shows a top perspective view of the robot lawnmower, according to a second embodiment, without a cover and in working position;
Figure 17 shows a top perspective view of the robot lawnmower of Figure 16, in the rear bump position;
Figure 18 shows a top perspective view of the robot lawnmower of Figure 16, in the front bump position;
Figure 19 shows a front view of the robot lawnmower of Figure 16;
Figure 20 shows an enlarged view of a portion of Figure 19 contained in circle A;
Figure 21 shows a sectional view according to line XXI-XXI of Figure 16;
Figure 22 shows a sectional view similar to the one in Figure 21, in a lifted position of the robot lawnmower;
Figure 23 shows a side view of the robot lawnmower of Figure 16;
Figure 24 shows a sectional view according to line XXIV-XXIV of Figure 23.

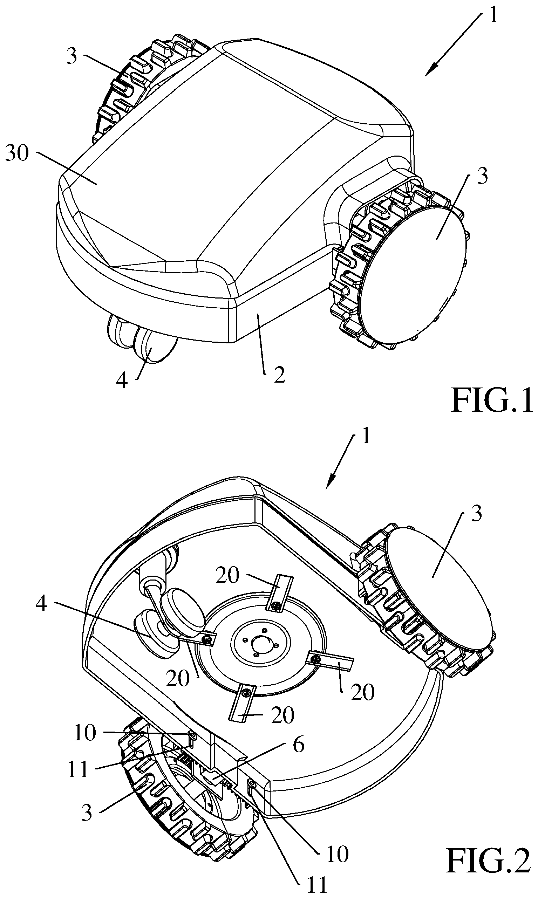

A robot lawnmower 1 comprises a base frame 2, a cover 30 integral with the base frame 2, two driving wheels 3 and at least one directional idler wheel 4 (Figures 1 and 2).

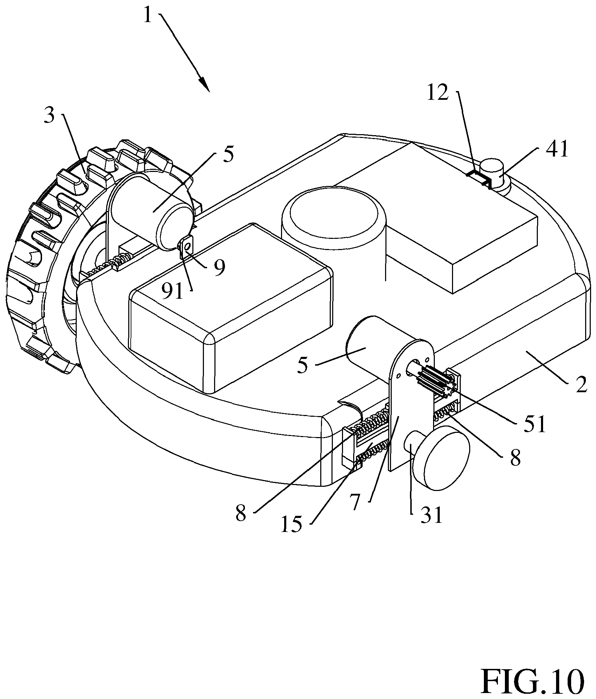

Each driving wheel 3 is driven by an electric motor 5 by means of a gear 51 (Figure 10).

Motor 5 is fixed to a slide 6 by means of a bracket 7 to which the driving wheel 3 is rotatably associated by means of a hub 31 which is integral with bracket 7 and extends outwards from bracket 7, as shown in Figure 10, for example.

Motor 5 therefore is integral with slide 6 and the driving wheel 3 is rotatably associated with bracket 7 by means of hub 31.

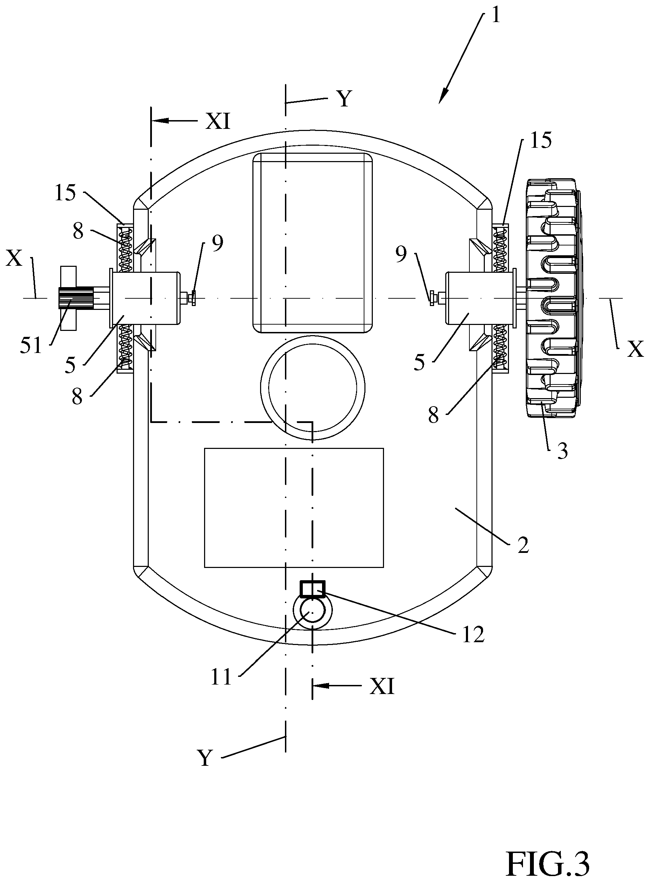

The axis of hub 31 corresponds to the rotation axis X of the driving wheel 3 (Figure 3).

Slide 6 is adapted to slide along a guide 15 in the direction of motion, the direction of the motion axis Y, for example, wherein two pairs of springs 8 tend to keep slide 6 in a middle position of guide 15 (Figures 3-5, 10 and 13).

The direction of the motion axis Y is orthogonal to the direction of the rotation axis X of the driving wheels 3 (Figure 3).

The rotation axes X and the motion axis Y identify an operating plane of the robot lawnmower 1 parallel to the ground on which the robot lawnmower 1 moves.

The motion axis Y coincides with the rectilinear direction of motion of the robot lawnmower 1 when the directional idler wheel 4 is aligned with the driving wheels 3.

The motion of the robot lawnmower 1 may also occur along a curved trajectory at any point of which a component along the motion axis Y is always identifiable. The curved trajectory in any case is included in the operating plane of the robot lawnmower 1.

In the embodiment shown, the sliding direction of slide 6 corresponds to the longitudinal direction of the robot lawnmower 1, i.e., the direction of the motion axis Y, i.e., the direction of motion of the robot lawnmower 1 when the directional idler wheel 4 is oriented as the driving wheels 3 so that the robot lawnmower 1 moves forwards or backwards in rectilinear manner.

For example, the motion axis Y may be horizontal, i.e., the robot lawnmower 1 moves on a horizontal plane (ground).

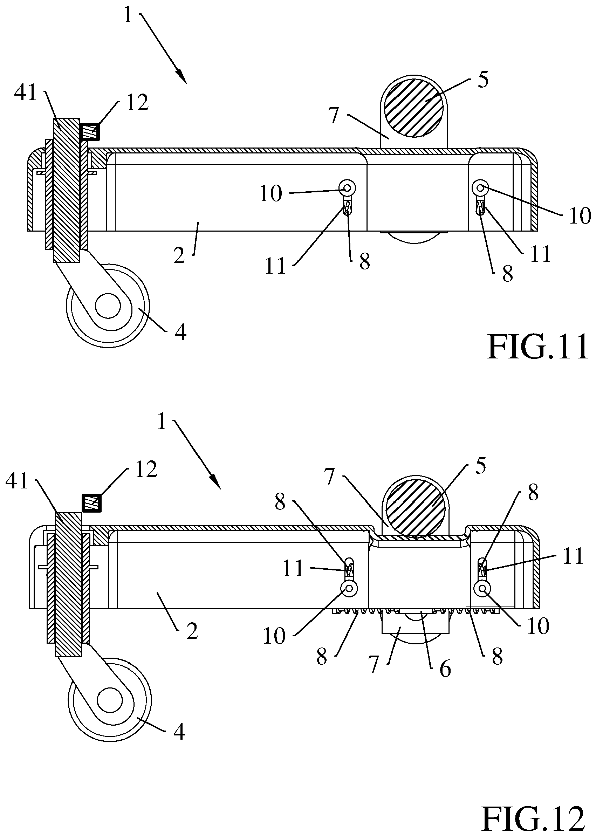

Guide 15 is integral with the base frame 2 in the direction of the motion axis Y, while it may slide in the direction of a lifting axis Z by two pins 10 sliding along guides 11 between a high position and a low position (Figures 11, 12). The high position preferably is the one of maximum height.

The lifting axis Z is orthogonal to the operating plane, i.e., to both the rotation axes X and the motion axis Y.

Usually, the lifting axis Z is vertical, i.e., the robot lawnmower 1 moves on a horizontal plane (ground).

The high position of the pins 10 corresponds to the working position of the robot lawnmower 1 in which a blade 20 is enabled to the cut motion, while the low position of the pins 10 corresponds to a lifting position of the robot lawnmower 1 in which blade 20 is not enabled to the cut motion for safety reasons.

The number of blades 20 may vary. For example, Figure 2 shows four blades 20 which rotate integral with a conveniently driven cutting plate.

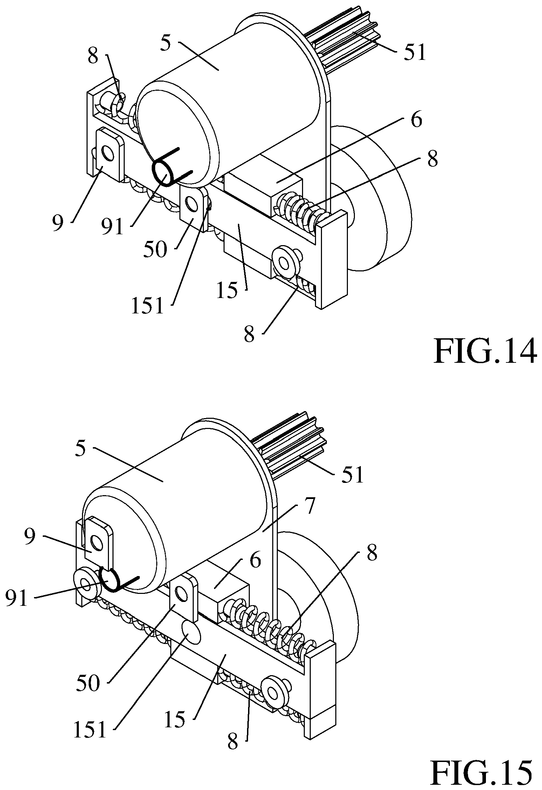

Motor 5 is fixed to bracket 7 so as to protrude above the base frame 2 towards a sensor 9 integral with the base frame 2 and adapted to detect the movement along the motion axis Y of motor 5 with respect to the base frame 2, i.e., of slide 6 and the driving wheels 3 with respect to the base frame 2 (Figures 10, 13 and 14).

Sensor 9 comprises a switch, is adapted to detect the movement of a magnet 91 integral with motor 5, and controls the blocking and subsequent reversal of motion of the driving wheel 3 it is driving by means of a control unit of the robot lawnmower 1.

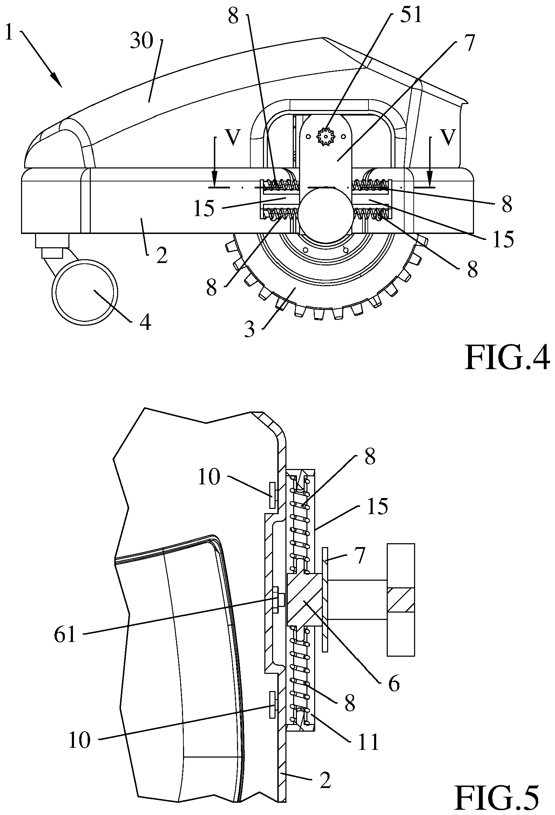

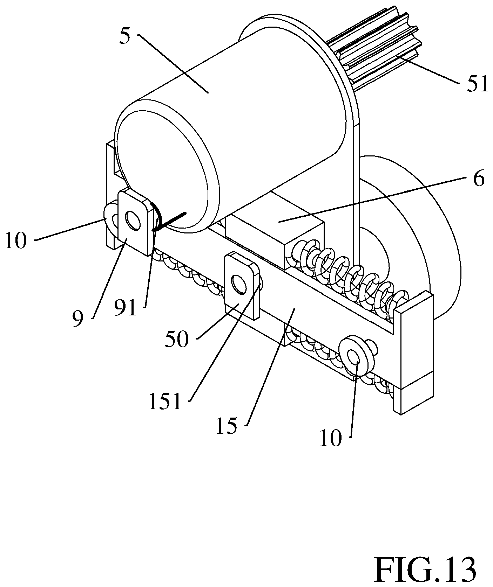

A further sensor 50, similar to sensor 9, detects the movement along the lifting axis Z of the base frame 2 in case the robot lawnmower 1 is lifted, wherein a magnet 61 (Figures 5, 7, 9) integral with guide 15 interacts with said sensor 50 through a through hole 151 of guide 15 (Figures 13-15).

The movement along the lifting axis Z is also detected by a further sensor 12 again, similar to the sensors 9, 50, which is at the directional idler wheel 4 (Figures 3, 11 and 12). More specifically, a pin 41, integral with the directional idler wheel 4 along the lifting axis Z, is adapted to slide with respect to the base frame 2 from a high position and a low position. The high position preferably is the one of maximum height.

Similar to the positions defined for slide 6, only if sensor 12 detects pin 41 in the high position, blade 20 is enabled for the cut motion (Figure 11). Sensor 50 detects magnet 61 in front of itself in such a position. The enabling of blade 20 is therefore controlled by two independent sensors 12, 50 so as to increase the safety of the user.

Operatively, during the regular working motion, the robot lawnmower 1 provides for slide 6 to be in the middle of guide 15, unless small oscillations comprised within a predefined threshold value in the control unit. Slide 6 and pin 41 of the directional idler wheel 4 are in the high position: blade 20 is enabled to the cut motion.

When the robot lawnmower 1 hits an obstacle and slide 6 moves from said middle position past said predefined threshold value, the control unit controls the stopping of the robot lawnmower 1 and the reversal of the motion of the driving wheels 3. Following the bump, the control unit may also block blade 20 and restart it only after the reversal of motion.

Advantageously, the use of the springs 8 allows a quick response and an effective damping effect: the robot lawnmower 1 is not damaged and quickly resumes working in a different direction without skidding the wheels on the yard.

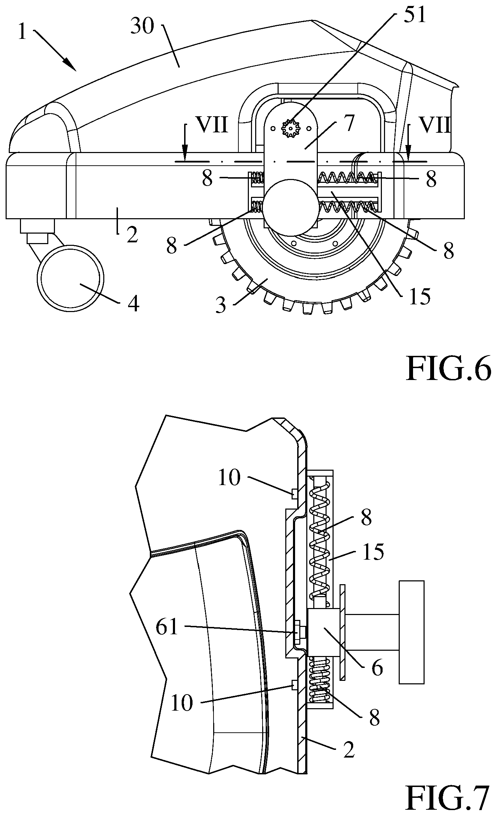

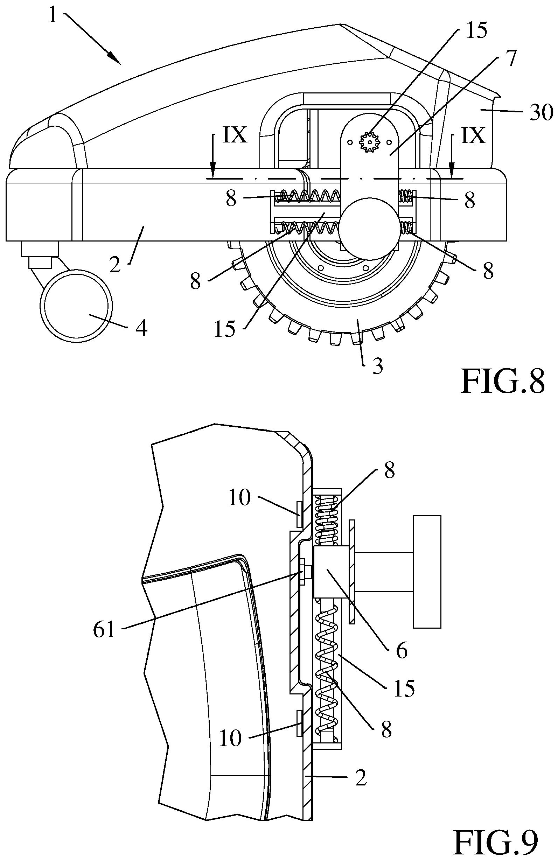

The configuration of the springs 8, with slide 6 in the middle, allows a similar behavior in case of a front bump (Figures 6 and 7) and in case of a rear bump (Figures 8 and 9).

Guide 15 is simple to fix to the base frame 2 and the springs 8 are easily accessible from the outside for possible replacement.

The elastic means may also be internal because they do not require frequent adjustment and/or replacement, probably never during the life of the robot: the fact that they are internal gives them increased protection against damage by foreign bodies.

The means adapted to block blade 20 following lifting are simple to couple to the obstacle detection means.

The sensors 9, 12, 50 are fixed to the base frame 2, well protected by cover 30.

The sensors 9, 12, 50 are known movement sensors which are independently controlled by the control unit.

Alternatively, two pairs of springs 8 alone may be associated with each guide 15. More generally, the presence of elastic means forcing slide 6 into the middle position is simply required.

Sensor 9 could be capable of detecting both a movement along the motion axis Y and a movement along the lifting axis Z, therefore rendering useless the sensors 12 and 50, which in turn may be alternative.

The robot lawnmower 1 according to the present invention is simple to assemble, with obstacle impact detection means directly associated with the driving wheels 3, in which the axis of the two driving wheels 3 is movable to translation with respect to the base frame 2.

To detect the impact, therefore it is not necessary for cover 30 to be movable with respect to the base frame 2: it is sufficient for the driving wheels 3 to be able to translate with respect to the base frame 2.

The springs 8 serve a dual purpose: they define the blocking position of the driving wheels 3 and dampen the impact.

The components used for the detection means are commercially known and easy to find on the market. The position in which said components are assembled makes maintenance and possible replacement simple.

Alternatively, guide 15 may be oblique, i.e., slide 6 may slide according to a direction providing for both a component along the motion axis Y and a component along the lifting axis Z. There must always be the component along the motion axis Y so as to absorb the bump which has a prevailing component in the direction of the motion axis Y. Slide 6, and therefore bracket 7, is therefore in any case suitable to move in the direction of motion of the robot lawnmower 1.

The elastic means are to keep slide 6 in a position of equilibrium, preferably but not exclusively a middle position of guide 15.

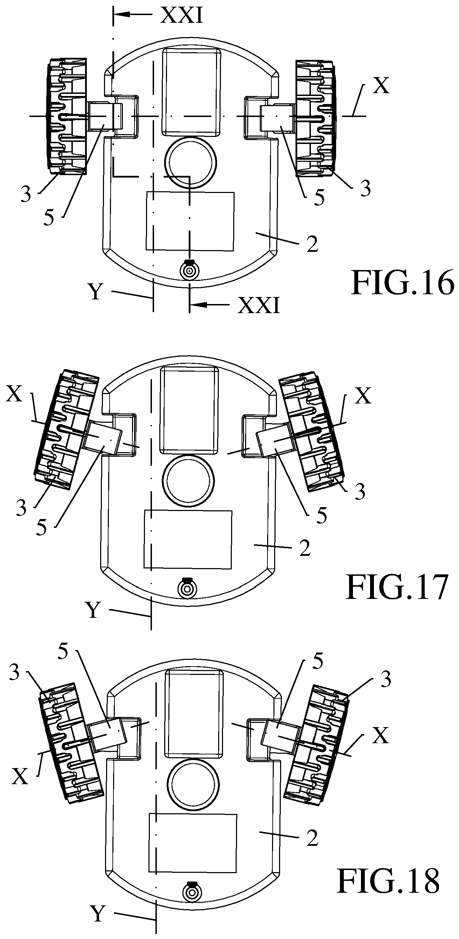

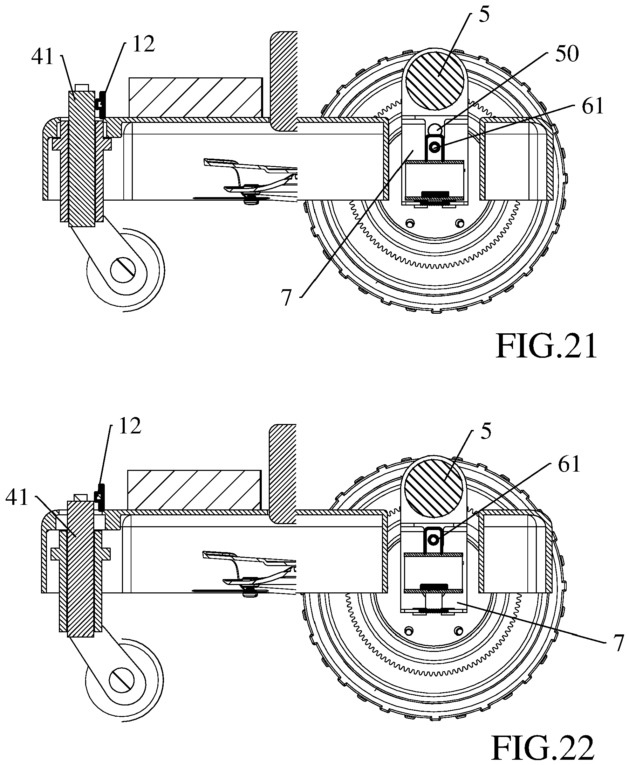

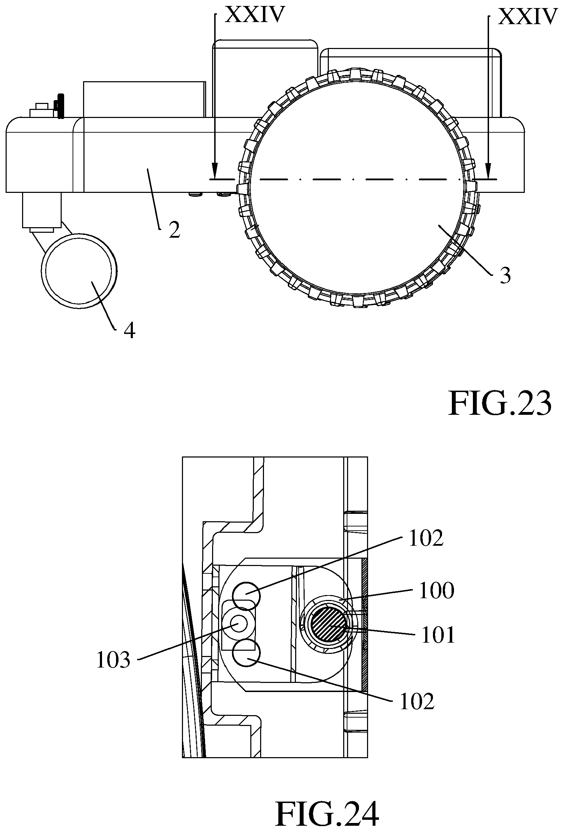

According to a second embodiment shown in Figures 16-24, unlike the embodiment shown in Figures 1-15, the brackets 7 are again adapted to move with respect to the base frame 2 in the direction of motion of the robot lawnmower 2 but rotating around the lifting axis Z instead of translating in the direction of the motion axis Y (Figures 16-18).

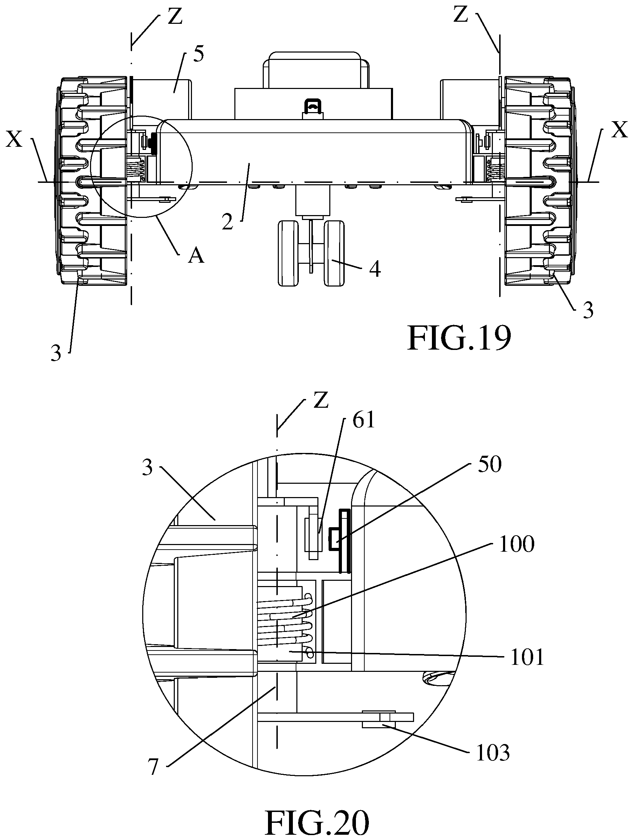

More specifically, each bracket 7 is rotatably associated with frame 2 so as to rotate around the lifting axis Z (Figures 19-20).

A spring 100, associated with bracket 7 in a pin 101, is adapted to keep bracket 7 in equilibrium with respect to the base frame 2 in the absence of bumps (Figure 16).

A front or rear bump past a predetermined threshold forces spring 100 to allow the rotation of bracket 7 around the lifting axis Z, in one direction or the other based on the type of bump, front or rear (Figures 17, 18).

Two sensors 102 adapted to detect the movement of a magnet 103 integral with bracket 7 of the driving wheel 3 are provided integral with frame 2, for each driving wheel 3.

The use of two separate sensors 102 allows the front bump and the rear bump to be distinguished.

Similar to the embodiment in Figures 1-15, also the second embodiment in Figures 16-24 provides the sensors 12 and 50 for detecting the movement of the base frame 2, and therefore of blade 20, along the lifting axis Z.

Advantageously, in both embodiments, cover 30 always remains integral to the base frame 2, while bracket 7 with motor 3 may move with respect to the base frame 2, thus absorbing the bump.

Alternatively, said embodiments may be provided with the motors 5 in axis with the respective hubs 31, i.e., with motor 5 which controls the rotation of hub 31 on which a driving wheel 3 is keyed. Differently, in the embodiments described, hub 31 does not turn the driving wheel 3 but only serves as support on which it slides, by rotating the driving wheel 3 controlled by the off-axis gear 51.

## Claims

1. Robot lawnmower (1) comprising a base frame (2), a cover (30) integral with the base frame (2), two driving wheels (3) and at least one directional idler wheel (4), wherein each driving wheel (3) is driven by an electric motor (5),
wherein
each motor (5) is fixed to a bracket (7) to which the respective driving wheel (3) is rotatably fixed,
**characterized in that**
the robot lawnmower (1) comprises absorbing means (8, 15, 16, 100, 101) of a bump of the robot lawnmower (1), wherein the absorbing means (8, 15, 16, 100, 101) are adapted to allow the movement of the bracket (7) with respect to the base frame (2) in the case of a bump in the direction of motion of the robot lawnmower (1),
wherein the absorbing means (8, 15, 16, 100, 101) comprise elastic means (8, 100) adapted to keep the bracket (7) in a position of equilibrium with respect to the base frame (2) in the absence of bumps,
said robot lawnmower (1) further comprising at least one sensor (9, 102) fixed to the base frame (2) and adapted to detect said movement of the bracket (7) with respect to the base frame (2), and a control unit adapted to block and reverse the motion of the driving wheels (3) following the detection of said movement of the bracket (7) with respect to the base frame (2).

2. Robot lawnmower (1) according to claim 1, **characterized in that** the absorbing means (8, 15, 16) are adapted to allow the translation of the bracket (7) with respect to the base frame (2).

3. Robot lawnmower (1) according to claim 2, **characterized in that** the bracket (7) is fixed to a slide (6) adapted to slide along a guide (15) fixed to the base frame (2), wherein the elastic means (8) are adapted to keep the slide (6) in an equilibrium position in the guide (15) in the absence of bumps, wherein the sensor (9) is adapted to detect the movement of the slide (6) along the guide (15).

4. Robot lawnmower (1) according to claim 1, **characterized in that** the absorbing means (100, 101) are adapted to allow the bracket (7) to rotate with respect to the base frame (2).

5. Robot lawnmower (1) according to claim 4, **characterized in that** a spring (100) associated with a pin (101) is provided, wherein the spring (100) is adapted to keep the bracket (7) in equilibrium with respect to the base frame (2) in the absence of bumps.

6. Robot lawnmower (1) according to claim 5, **characterized in that** it comprises two sensors (102) integral with the base frame (2) adapted to detect the rotation of the bracket (7) with respect to the base frame (2), the use of two sensors (102) allowing to distinguish a front bump and a rear bump.

7. Robot lawnmower (1) according to any one of the preceding claims, **characterized in that** the at least one sensor (9, 102) comprises a switch and is adapted to detect the movement of a magnet (91, 103) integral with the bracket (7).

8. Robot lawnmower (1) according to any one of the preceding claims, **characterized in that** it comprises lifting means (10, 11) suitable for allowing the absorbing means (8, 15, 16, 100, 101) to slide along a lifting axis (Z) between a high position and a low position, wherein the high position corresponds to the working position of the robot lawnmower (1) in which a blade (20) is enabled to the cut motion, while the low position corresponds to a lifting position of the robot lawnmower (1) in which the blade (20) is disabled to the cut motion for safety reasons.

9. Robot lawnmower (1) according to claim 8, **characterized in that** it comprises a further sensor (12, 50) suitable for detecting the movement along the lifting axis (Z) with respect to the base frame (2), wherein the control unit is adapted to enable the cut motion of the blade (20) only in the case in which the absorbing means (8, 15, 16, 100, 101) are in the high position.

10. Robot lawnmower (1) according to claim 8 or 9, **characterized in that** it comprises a pin (41) integral in the direction of the lifting axis (Z) to the directional idler wheel (4) and adapted to slide between the high position and the low position.

## Patentansprüche

1. Mähroboter (1) mit einem Grundrahmen (2), einer mit dem Grundrahmen (2) integral ausgebildeten Abdeckung (30), zwei Antriebsrädern (3) und mindestens einem direktionalen Leerlaufrad (4), wobei jedes Antriebsrad (3) von einem Elektromotor (5) angetrieben wird,
wobei jeder Motor (5) an einer Halterung (7) befestigt, an der das jeweilige Antriebsrad (3) drehbar befestigt ist,
**dadurch gekennzeichnet,**
**dass** der Mähroboter (1) Absorptionseinrichtungen (8, 15, 16, 100, 101) zum Absorbieren eines Stoßes des Mähroboters (1) aufweist, wobei die Absorptionseinrichtungen (8, 15, 16, 100, 101) dazu ausgebildet sind, die Bewegung der Halterung (7) in Bezug auf den Grundrahmen (2) im Falle eines Stoßes in Bewegungsrichtung des Mähroboters (1) zuzulassen,
wobei die Absorptionseinrichtungen (8, 15, 16, 100, 101) elastische Einrichtungen (8, 100) umfassen, die dazu ausgebildet sind, die Halterung (7) bei Nichtvorhandensein von Stößen in einer Gleichgewichtsposition in Bezug auf den Grundrahmen (2) zu halten,
wobei der Mähroboter (1) ferner mindestens einen Sensor (9, 102) aufweist, der an dem Grundrahmen (2) befestigt ist und dazu ausgebildet ist, die Bewegung der Halterung (7) in Bezug auf den Grundrahmen (2) zu erfassen, sowie eine Steuereinheit aufweist, die dazu ausgebildet ist, die Bewegung der Antriebsräder (3) nach der Erfassung der Bewegung der Halterung (7) in Bezug auf den Grundrahmen (2) zu blockieren und umzukehren.

2. Mähroboter (1) nach Anspruch 1,
**dadurch gekennzeichnet, dass** die Absorptionseinrichtungen (8, 15, 16) dazu ausgebildet sind, die Verschiebung der Halterung (7) in Bezug auf den Grundrahmen (2) zuzulassen.

3. Mähroboter (1) nach Anspruch 2,
**dadurch gekennzeichnet, dass** die Halterung (7) an einem Schlitten (6) befestigt ist, der entlang einer an dem Grundrahmen (2) befestigten Führung (15) gleitend verschiebbar ist, wobei die elastischen Einrichtungen (8) dazu ausgebildet sind, den Schlitten (6) bei Nichtvorhandensein von Stößen in einer Gleichgewichtsposition in der Führung (15) zu halten, wobei der Sensor (9) dazu ausgebildet ist, die Bewegung des Schlittens (6) entlang der Führung (15) zu erfassen.

4. Mähroboter (1) nach Anspruch 1,
**dadurch gekennzeichnet, dass** die Absorptionseinrichtungen (100, 101) dazu ausgebildet sind, eine Rotationsbewegung der Halterung (7) in Bezug auf den Grundrahmen (2) zu ermöglichen.

5. Mähroboter (1) nach Anspruch 4,
**dadurch gekennzeichnet, dass** eine mit einem Stift (101) verbundene Feder (100) vorgesehen ist, wobei die Feder (100) dazu ausgebildet ist, die Halterung (7) bei Nichtvorhandensein von Stößen in Bezug auf den Grundrahmen (2) im Gleichgewicht zu halten.

6. Mähroboter (1) nach Anspruch 5,
**dadurch gekennzeichnet, dass** er zwei Sensoren (102) aufweist, die in den Grundrahmen (2) integriert sind und die Rotation der Halterung (7) in Bezug auf den Grundrahmen (2) erfassen können, wobei die Verwendung von zwei Sensoren (102) die Unterscheidung zwischen einem vorderen Stoß und einem hinteren Stoß ermöglicht.

7. Mähroboter (1) nach einem der vorhergehenden Ansprüche,
**dadurch gekennzeichnet, dass** der mindestens eine Sensor (9, 102) einen Schalter umfasst und dazu ausgebildet ist, die Bewegung eines mit der Halterung (7) integral ausgebildeten Magneten (91, 103) zu erfassen.

8. Mähroboter (1) nach einem der vorhergehenden Ansprüche,
**dadurch gekennzeichnet, dass** er Hebeeinrichtungen (10, 11) aufweist, die geeignet sind, eine gleitende Verschiebung der Absorptionseinrichtungen (8, 15, 16, 100, 101) entlang einer Hubachse (Z) zwischen einer hohen Position und einer niedrigen Position zu ermöglichen, wobei die hohe Position der Arbeitsposition des Mähroboters (1) entspricht, in der die Schneidbewegung eines Messers (20) aktiviert ist, während die niedrige Position einer Hebeposition des Mähroboters (1) entspricht, in der die Schneidbewegung des Messers (20) aus Sicherheitsgründen deaktiviert ist.

9. Mähroboter (1) nach Anspruch 8,
**dadurch gekennzeichnet, dass** er einen weiteren Sensor (12, 50) aufweist, der zum Erfassen der Bewegung entlang der Hubachse (Z) in Bezug auf den Grundrahmen (2) geeignet ist, wobei die Steuereinheit dazu ausgebildet ist, die Schneidbewegung des Messers (20) nur dann zu ermöglichen, wenn sich die Absorptionseinrichtungen (8, 15, 16, 100, 101) in der hohen Position befinden.

10. Mähroboter (1) nach Anspruch 8 oder 9,
**dadurch gekennzeichnet, dass** er einen Stift (41) umfasst, der in Richtung der Hubachse (Z) mit dem direktionalen Leerlaufrad (4) integral ausgebildet ist und zwischen der hohen Position und der niedrigen Position gleitend verschiebbar ist.

## Revendications

1. Robot tondeuse à gazon (1) comprenant un châssis de base (2), un capot (30) solidaire du châssis de base (2), deux roues motrices (3) et au moins une roue folle directionnelle (4), où chaque roue motrice (3) est entraînée par un moteur électrique (5),
où chaque moteur (5) est fixé à un support (7) auquel la roue motrice (3) respective est fixée de manière rotative,
**caractérisé en ce que** le robot tondeuse à gazon (1) comprend des moyens d'absorption (8, 15, 16, 100, 101) d'un choc du robot tondeuse à gazon (1), où les moyens d'absorption (8, 15, 16, 100, 101) sont adaptés à permettre le mouvement du support (7) par rapport au châssis de base (2) dans le cas d'un choc dans la direction de mouvement du robot tondeuse à gazon (1),
où les moyens d'absorption (8, 15, 16, 100, 101) comprennent des moyens élastiques (8, 100) adaptés pour maintenir le support (7) dans une position d'équilibre par rapport au châssis de base (2) en l'absence de chocs,
ledit robot tondeuse à gazon (1) comprenant en outre au moins un capteur (9, 102) fixé au châssis de base (2) et adapté pour détecter ledit mouvement du support (7) par rapport au châssis de base (2), et une unité de commande adaptée pour bloquer et inverser le mouvement des roues motrices (3) après la détection dudit mouvement du support (7) par rapport au châssis de base (2).

2. Robot tondeuse à gazon (1) selon la revendication 1, **caractérisé en ce que** les moyens d'absorption (8, 15, 16) sont adaptés pour permettre la translation du support (7) par rapport au châssis de base (2).

3. Robot tondeuse à gazon (1) selon la revendication 2, **caractérisé en ce que** le support (7) est fixé à une glissière (6) adaptée pour coulisser le long d'un guide (15) fixé au châssis de base (2), où les moyens élastiques (8) sont adaptés pour maintenir la glissière (6) dans une position d'équilibre dans le guide (15) en l'absence de chocs, où le capteur (9) est adapté pour détecter le mouvement de la glissière (6) le long du guide (15).

4. Robot tondeuse à gazon (1) selon la revendication 1, **caractérisé en ce que** les moyens d'absorption (100, 101) sont adaptés à permettre au support (7) de tourner par rapport au châssis de base (2).

5. Robot tondeuse à gazon (1) selon la revendication 4, **caractérisé en ce qu'**un ressort (100) associé à une broche (101) est prévu, où le ressort (100) est adapté pour maintenir le support (7) en équilibre par rapport au châssis de base (2) en l'absence de chocs.

6. Robot tondeuse à gazon (1) selon la revendication 5, **caractérisé en ce qu'**il comprend deux capteurs (102) solidaires du châssis de base (2) adaptés pour détecter la rotation du support (7) par rapport au châssis de base (2), l'utilisation de deux capteurs (102) permettant de distinguer un choc avant et un choc arrière.

7. Robot tondeuse à gazon (1) selon l'une quelconque des revendications précédentes, **caractérisé en ce que** le au moins un capteur (9, 102) comprend un interrupteur et est adapté pour détecter le mouvement d'un aimant (91, 103) solidaire du support (7).

8. Robot tondeuse à gazon (1) selon l'une quelconque des revendications précédentes, **caractérisé en ce qu'**il comprend des moyens de levage (10, 11) appropriés pour permettre aux moyens d'absorption (8, 15, 16, 100, 101) de coulisser le long d'un axe de levage (Z) entre une position haute et une position basse, où la position haute correspond à la position de travail du robot tondeuse à gazon (1) dans laquelle une lame (20) est activée pour le mouvement de coupe, tandis que la position basse correspond à une position de levage du robot tondeuse à gazon (1) dans laquelle la lame (20) n'est pas activée pour le mouvement de coupe pour des raisons de sécurité.

9. Robot tondeuse à gazon (1) selon la revendication 8, **caractérisé en ce qu'**il comprend un autre capteur (12, 50) approprié pour détecter le mouvement le long de l'axe de levage (Z) par rapport au châssis de base (2), où l'unité de commande est adaptée à activer le mouvement de coupe de la lame (20) uniquement dans le cas où les moyens d'absorption (8, 15, 16, 100, 101) sont dans la position haute.

10. Robot tondeuse à gazon (1) selon la revendication 8 ou 9, **caractérisé en ce qu'**il comprend une broche (41) solidaire dans la direction de l'axe de levage (Z) de la roue folle directionnelle (4) et adaptée à coulisser entre la position haute et la position basse.
